# EUROPEAN PATENT APPLICATION

(11) **EP 4 775 012 A1**
(43) Date of publication of application: **15.07.2026**
(21) Application number: 25221044.8
(22) Date of filing: 05.12.2025
(51) Int. Cl.: A01D 34/00, B08B 1/16, B60S 1/68

(54) **A ROBOTIC LAWN MOWER WHEEL CLEANING DEVICE**

(30) Priority: 10.01.2025 SE 2550015
(71) Applicant: Husqvarna AB, 561 82 Huskvarna (SE)
(72) Inventor: Emme, Linus, 561 82 Huskvarna (SE)

(57) **Abstract**

The present disclosure relates to a wheel cleaning device (150, 150A; 250) adapted to be attached to a swivelable wheel (130; 130A, 130B) of a robotic lawn mower (100). The swivelable wheel (130; 130A, 130B) comprises a rotatable wheel part (132), a wheel shield (133) at a center of the wheel part (132), and a holding arm (134) that is adapted to connect the wheel part (132) to the robotic lawn mower (100) in a swivelable manner, extending into the wheel part (132) via the wheel shield (133) that is fixed relative the holding arm (134). The wheel cleaning device (150, 250) comprises a cleaner holder (151, 251) that is adapted to be attached to a side of the wheel part (132), radially displaced from the wheel shield (133), and a debris removal protrusion (152, 252) that has a longitudinal extension (E) and is adapted to extend from the cleaner holder (151, 251) towards the wheel shield (133) along its longitudinal extension (E) when mounted.

## Description

### TECHNICAL FIELD

The present disclosure relates to a robotic lawn mower comprising a body, at least one pair of drive wheels, at least one swivelable wheel and at least one rotatable grass cutting disc, having a disc rotation axle that is adapted to rotate about a disc rotation axis.

### BACKGROUND

Robotic lawn mowers, such as for example robotic lawn mowers, are becoming increasingly more popular. A robotic lawn mower is usually battery-powered by means of a rechargeable battery and is adapted to cut grass on a user's lawn automatically. A robotic lawn mower can be charged automatically without intervention of the user, and does normally not need to be manually managed after being set once.

In a typical deployment a work area, such as a garden, park, sports field, golf court and the like, the work area is enclosed by a boundary that can be in the form of a boundary wire with the purpose of keeping the robotic lawn mower inside the work area. An electric control signal may be transmitted through the boundary wire thereby generating an (electro-) magnetic field emanating from the boundary wire. The robotic working tool is typically arranged with one or more sensors adapted to sense the control signal.

Alternatively, or as a supplement, the robotic lawn mower can be equipped with a navigation system that is adapted for satellite navigation by means of GPS (Global Positioning System) or some other Global Navigation Satellite System (GNSS) system, for example using Real Time Kinematic (RTK). A boundary is in this case not defined by a physical wire, but by a virtual boundary.

Further, a robotic lawn mower typically comprises two or more drive wheels, configured to propel the robotic lawn mower during operation thereof, and one or more swivelable support wheels, configured to support the robotic lawn mower during operation thereof. The one or more support wheels are commonly of a type known as caster wheels, which are constituted by swivelable wheels that are rotatably attached to a lawn mower body of the robotic lawn mower by means of an attachment arm that provides a swivel joint. Each caster wheel is further rotatable around a wheel axle normally being substantially parallel to the ground assuming the ground is flat.

A problem associated with such robotic lawn mowers is that grass and other debris adheres around an attachment arm that connects the wheel to the lawn mower body. This adhered debris decrease service life of parts and can sometimes be really hard to remove. Eventually lumps of grass and debris fall off and reduce the quality of the lawn after cutting which is undesirable, in particular at golf courses.

It is therefore desired to provide means for removal of cut grass and other debris from the caster wheels or swivelable wheels.

### SUMMARY

The object of the present disclosure is to provide means for removal of cut grass and other debris from the caster wheels or swivelable wheels.

This object is achieved by means of a wheel cleaning device adapted to be attached to a swivelable wheel of a robotic lawn mower. Such a swivelable wheel comprises a rotatable wheel part, a wheel shield at a center of the wheel part, and a holding arm that is adapted to connect the wheel part to the robotic lawn mower in a swivelable manner, extending into the wheel part via the wheel shield that is fixed relative the holding arm. The wheel cleaning device comprises a cleaner holder that is adapted to be attached to a side of the wheel part, radially displaced from the wheel shield, and a debris removal protrusion that has a longitudinal extension and is adapted to extend from the cleaner holder towards the wheel shield along its longitudinal extension when mounted.

This means that when the wheel part is rotating, the wheel cleaning device also rotates when it is attached to the wheel part. Consequently, the debris removal protrusion then also rotates and can remove debris from the wheel shield, and a part of the holding arm since the holding arm is passed every revolution.

According to some aspects, the debris removal protrusion comprises a resilient scrape blade that extends along the longitudinal extension. Such a scrape blade can be given a complementary shape with respect to a part of the holding arm that can be cleaned from debris when the scrape blade passes.

According to some aspects, the debris removal protrusion comprises brush bristles that extend along the longitudinal extension. The brush bristles can for example be biased towards the junction between the holding arm and the wheel shield, providing an efficient cleaning at the junction.

According to some aspects, the cleaner holder and the debris removal protrusion are formed in the same piece of material. This enables an unexpensive manufacturing process and provides a durable part.

This object is also achieved by means of a swivelable wheel arrangement adapted to be attached to a robotic lawn mower, the swivelable wheel arrangement comprising a swivelable wheel that in turn comprises a rotatable wheel part, a wheel shield at a center of the wheel part, and a holding arm that is adapted to connect the wheel part to the robotic lawn mower in a swivelable manner, extending into the wheel part via the wheel shield that is fixed relative the holding arm. The swivelable wheel arrangement comprises the wheel cleaning device according to the above, being attached to a side of the wheel part, radially displaced from the wheel shield.

This means that when the wheel part is rotating, the wheel cleaning device also rotates, and consequently the debris removal protrusion then also rotates and can remove debris from the wheel shield, and a part of the holding arm, since the holding arm is passed every revolution.

According to some aspects, the wheel cleaning device is attached to the rotatable wheel part by means of at least one screw. In this manner, the wheel cleaning device can be easily replaced or added to a swivelable wheel arrangement.

According to some aspects, the debris removal protrusion comprises brush bristles that extend along the longitudinal extension (E), and where the wheel shield comprises a protruding tab. The debris removal protrusion is adapted to contact the tab each revolution of the swivelable wheel such that grass residue is removed from the debris removal protrusion.

In this manner, the brush bristles can be cleaned from debris every revolution of the swivelable wheel, which enhances the cleaning capacity of the brush bristles

This object is also achieved by means of robotic lawn mowers that are associated with the above advantages.

### BRIEF DESCRIPTION OF THE DRAWINGS

The present disclosure will now be described more in detail with reference to the appended drawings, where:
- Figure 1: shows a perspective top view of a robotic lawn mower;
- Figure 2: shows a perspective top view of the robotic lawn mower without bumper part;
- Figure 3: shows a perspective side view of the robotic lawn mower without bumper part;
- Figure 4: shows a schematic overview of the robotic lawn mower;
- Figure 5: shows a perspective bottom view of the robotic lawn mower;
- Figure 6: shows a perspective view of a swivelable wheel arrangement according to a first example;
- Figure 7: shows a front view of the swivelable wheel arrangement of Figure 6;
- Figure 8A: shows a perspective view of a swivelable wheel arrangement according to a second example;
- Figure 8B: shows an enlarged part of Figure 8A;
- Figure 9: shows a front view of the swivelable wheel arrangement of Figure 8A; and
- Figure 10: shows a perspective view of an alternative swivelable wheel arrangement according to the second example.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the present disclosure. As used herein, the singular forms "a", "an" and "the" are intended to include the plural forms as well, unless the context clearly indicates otherwise.

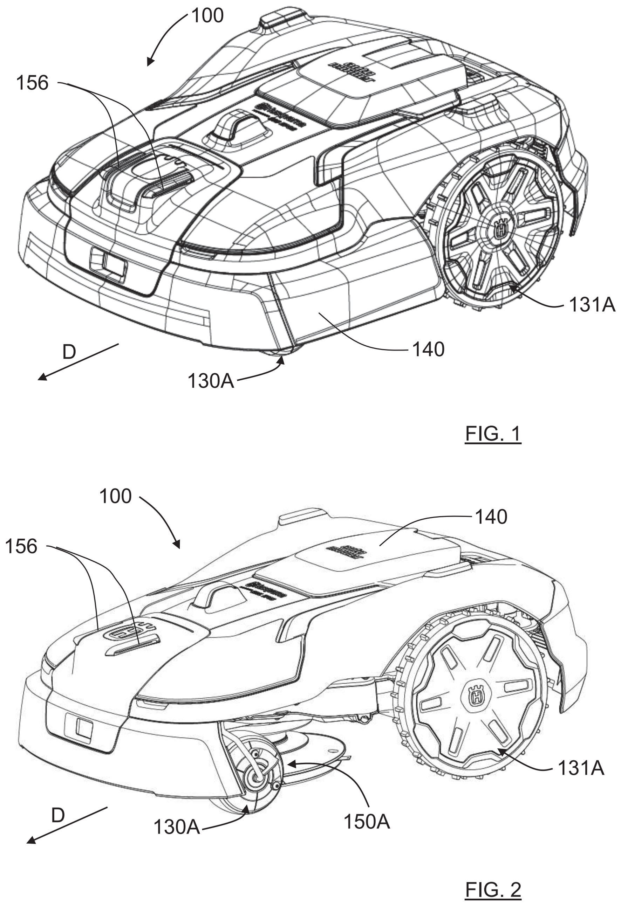

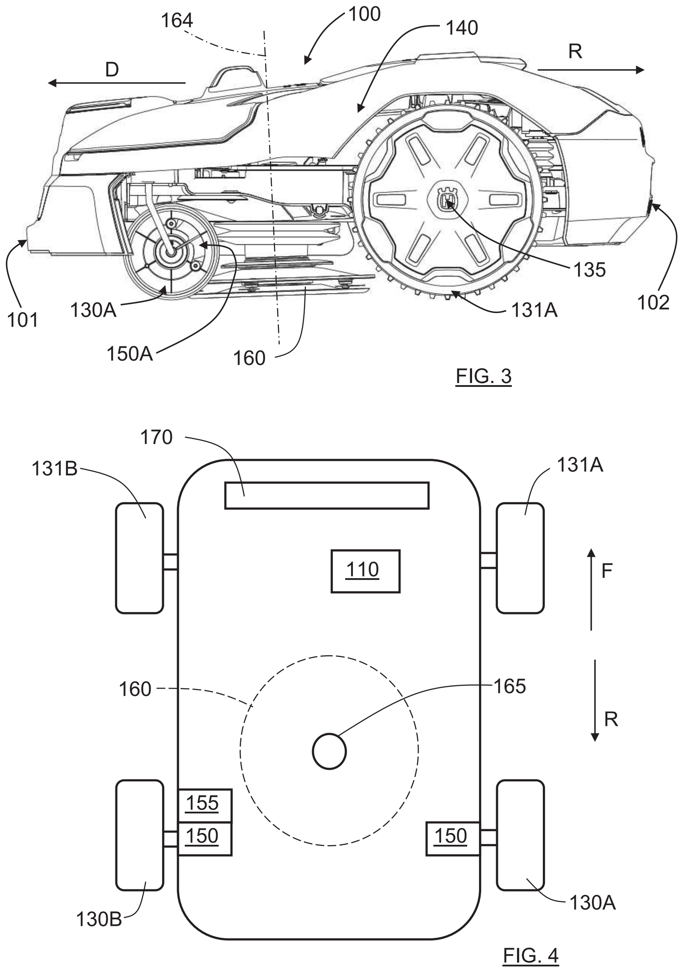

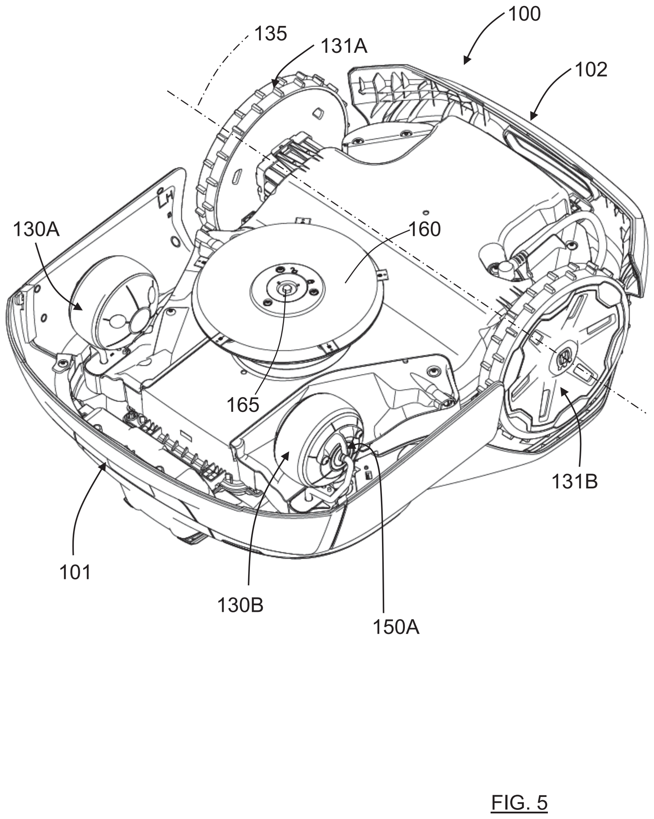

In the following, it is referred to Figure 1-5. Figure 1 shows a perspective side view of a robotic lawn mower 100, and Figure 2 shows the same view with a side bumper removed for increased visibility. Figure 3 shows a a perspective side view of the robotic lawn mower 100 without bumper part, Figure 4 shows a schematic overview of the robotic lawn mower 100 and Figure 5 shows a perspective bottom view of the robotic lawn mower 100.

According to some aspects, the robotic lawnmower 100 comprises a main body part 140 comprising a body 140, at least one pair of drive wheels 131A, 131B, at least one swivelable wheel 130A, 130B, and at least one rotatable grass cutting disc 160, having a disc rotation axle 165. The swivelable wheels 130A, 130B are known under other names, such as for example caster wheels.

The robotic lawnmower 100 is adapted for a forward travelling direction F and a reverse travelling direction R. The main body part 140 may for example comprise two or more sub-parts.

According to some aspects, the rotatable cutting disc 160 is driven by a cutter motor 165, and the drive wheels 131A, 131B are drivably connected to an electric drive wheel motor 150.

According to some further aspects, the robotic lawnmower 100 further comprises a rechargeable electric power source 155, such as a battery 155, adapted to provide power to the electric motors 150, 165 and a charging reception arrangement 156, for example in the form of charging skids. The charging reception arrangement 156 is adapted to be electrically connected to a charging transmission arrangement at a charging station (not shown).

According to some aspects, the robotic lawnmower 100 further comprises a control unit 110 and an environmental detection system 170 that for example comprises at least one of a radar transceiver, an ultrasonic device, a Lidar device, a navigation sensor arrangement and/or a boundary wire sensor. According to some further aspects, the control unit 110 is adapted to control and position the robotic lawn mower 100 by means of input derived from the environmental detection system 170.

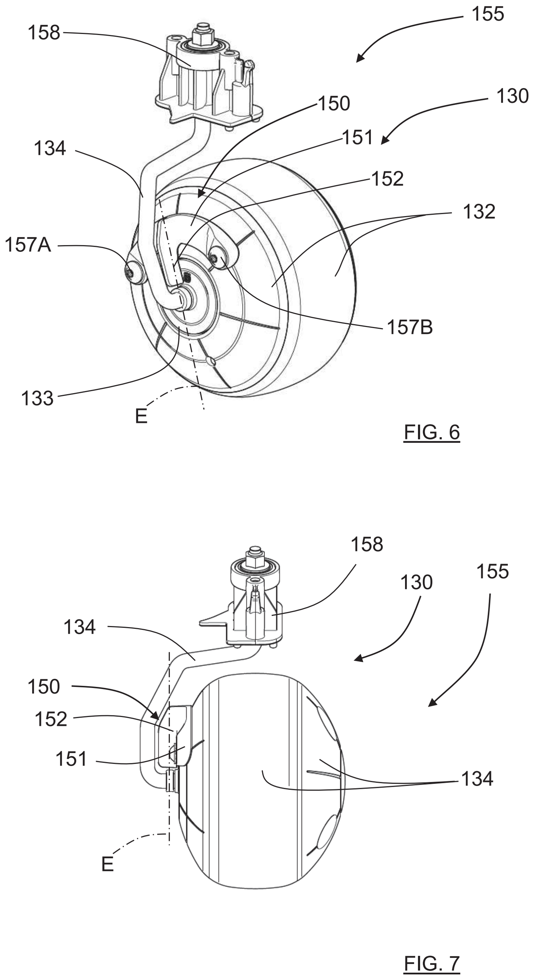

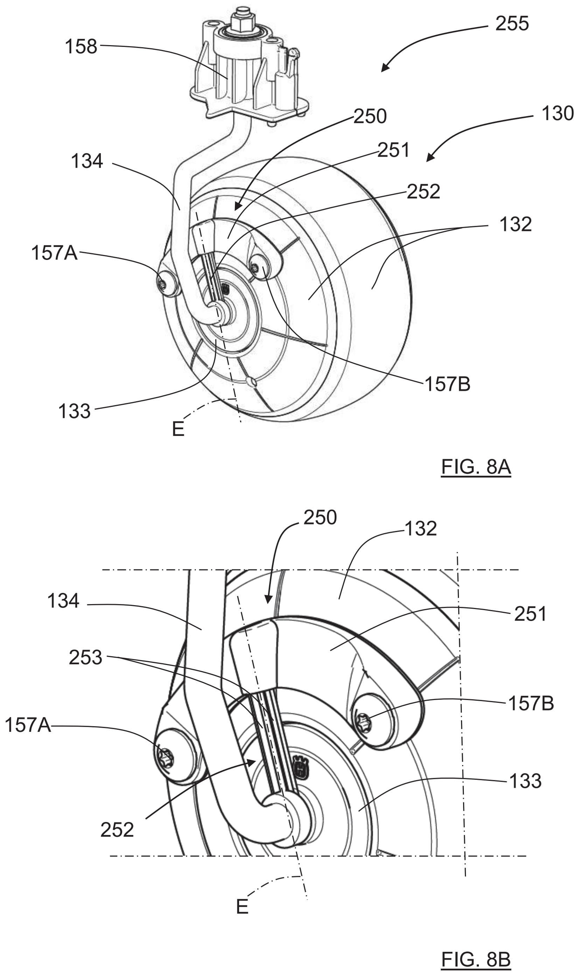

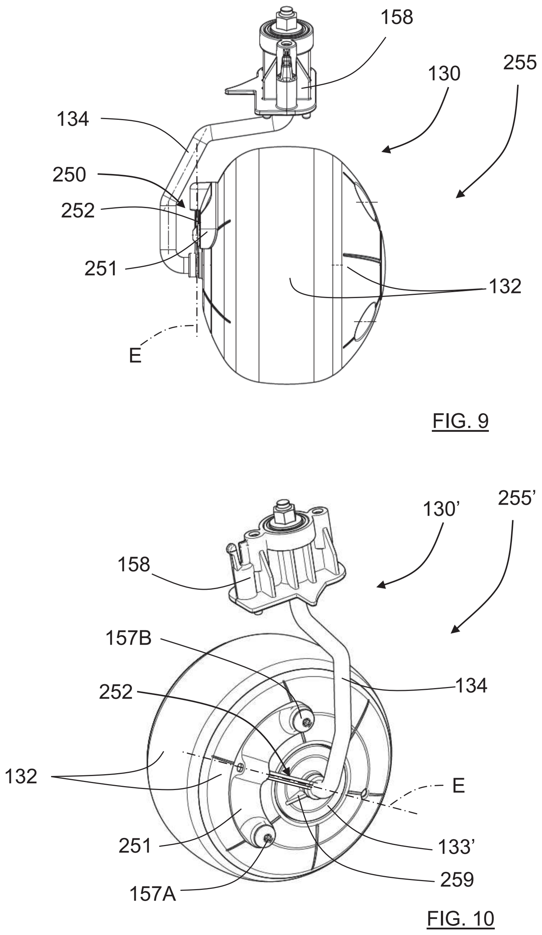

In the following, it is also referred to Figure 6-10. Figure 6 shows a perspective view of a swivelable wheel arrangement 155 according to a first example, and Figure 7 shows a front view of the swivelable wheel arrangement 155 of Figure 6. Figure 8A shows a perspective view of a swivelable wheel arrangement 255 according to a second example, Figure 8B shows an enlarged part of Figure 8A, and Figure 9 shows a front view of the swivelable wheel arrangement 255 of Figure 8A. Figure 10 shows a perspective view of an alternative swivelable wheel arrangement 255' according to the second example.

In particular, the present disclosure is directed towards a wheel cleaning device 150, 150A; 250 adapted to be attached to a swivelable wheel 130; 130A, 130B of a robotic lawn mower 100, for example the robotic lawn mower 100 as described above.

The swivelable wheel 130; 130A, 130B comprises a rotatable wheel part 132, a wheel shield 133 at a center of the wheel part 132, and a holding arm 134 that is adapted to connect the wheel part 132 to the robotic lawn mower 100 in a swivelable manner, extending into the wheel part 132 via the wheel shield 133 that is fixed relative the holding arm 134. This means that the wheel part 132 is rotatable relative to the wheel shield 133 and the holding arm 134.

The wheel cleaning device 150, 250 comprises a cleaner holder 151, 251 that is adapted to be attached to a side of the wheel part 132, radially displaced from the wheel shield 133, and a debris removal protrusion 152, 252 that has a longitudinal extension E and is adapted to extend from the cleaner holder 151, 251 towards the wheel shield 133 along its longitudinal extension E when mounted.

This means that when the wheel part 132 is rotating, the wheel cleaning device 150, 250 also rotates when it is attached to the wheel part 132. Consequently, the debris removal protrusion 152, 252 then also rotates and can remove debris from the wheel shield 133, and a part of the holding arm 134 since the holding arm 134 is passed every revolution.

According to some aspects, as in particular shown in Figure 6 and Figure 7 that illustrate a first example, the debris removal protrusion 152 comprises a resilient scrape blade 152 that extends along the longitudinal extension E. As evident from Figure 7, the scrape blade 152 has a complementary shape with respect to a part of the holding arm 134, following the shape of the part of the holding arm 134. In this manner, the part of the holding arm 134 can be cleaned from debris when the scrape blade 152 passes. In this context, the part of the holding arm 134 that is referred to is the part of the holding arm 134 that can be reached by the scrape blade 152, and its possible extension is thus limited by the size and shape of the scrape blade 152.

According to some aspects, as in particular shown in Figure 8 - Figure 10 that illustrate a second example, the debris removal protrusion 252 comprises brush bristles 253 that extend along the longitudinal extension E. The brush bristles 253 can be biased towards the junction between the holding arm 134 and the wheel shield 133.

With reference to Figure 1 - Figure 3 and Figure 6 - Figure 10, the present disclosure also relates to a swivelable wheel arrangement 155, 255 adapted to be attached to a robotic lawn mower 100, for example the robotic lawn mower 100 as described above.

The swivelable wheel arrangement 155, 255 comprises a swivelable wheel 130 that in turn comprises a rotatable wheel part 132, a wheel shield 133 at a center of the wheel part 132, and a holding arm 134 that is adapted to connect the wheel part 132 to the robotic lawn mower 100 in a swivelable manner, extending into the wheel part 132 via the wheel shield 133 that is fixed relative the holding arm 134. This means that the wheel part 132 is rotatable relative to the wheel shield 133 and the holding arm 134.

The swivelable wheel arrangement 155 comprises the wheel cleaning device 150, 150A; 250 as described herein, being attached to a side of the wheel part 132, radially displaced from the wheel shield 133.

This means that when the wheel part 132 is rotating, the wheel cleaning device 150, 250 also rotates, and consequently the debris removal protrusion 152, 252 then also rotates and can remove debris from the wheel shield 133, and a part of the holding arm 134 since the holding arm 134 is passed every revolution.

According to some aspects, the wheel cleaning device 150, 250 is attached to the rotatable wheel part 132 by means of at least one screw 157A, 157B. In this manner, the wheel cleaning device 150, 250 can be easily replaced or added to a swivelable wheel arrangement 155, 255. In the illustrated examples, there are two screws 157A, 157B but there can also be more screws or only one screw. In the case of only one screw, there may also be a guidance protrusion or lock pin that cp-operates with the screw to retain the wheel cleaning device 150, 250 in its place.

According to some aspects, as shown in Figure 10 that illustrates an alternative swivelable wheel arrangement 255' according to the second example, the debris removal protrusion 252 comprises brush bristles 253 that extend along the longitudinal extension E, and where the wheel shield 133' comprises a protruding tab 259, where the debris removal protrusion 252 is adapted to contact the tab 259 each revolution of the swivelable wheel 130' such that grass residue is removed from the debris removal protrusion 252. In this manner, the brush bristles 253 can be cleaned from debris every revolution of the swivelable wheel 130' which enhances the cleaning capacity of the brush bristles 253.

The wheel shield 133 can have any suitable diameter, but should allow the wheel cleaning device 150, 250 to be mounted to the rotatable wheel part 132.

With reference to Figure 1 - Figure 10, the present disclosure also relates to a robotic lawn mower 100, for example the robotic lawn mower 100 as described above.

The robotic lawn mower 100 comprises a body 140, at least one pair of drive wheels 131A, 131B, at least one rotatable grass cutting disc 160, having a disc rotation axle 165, wherein the robotic lawn mower 100 further comprises at least one swivelable wheel 130A, 130B; 130 as described herein, being equipped with the wheel cleaning device 150, 250.

It is to be noted that the wheel cleaning device 150, 250 mainly is not adapted to remove debris from the wheel part 132 which partly are adapted to contact ground during normal use.

Figure 6 - Figure 10 only illustrate one swivelable wheel 130 that is comprised in a swivelable wheel arrangement. The wheel cleaning device 150, 250 may of course be mounted to all swivelable wheels 130A, 130B of the robotic lawn mower 100.

According to some aspects, there may be mor than one debris removal protrusion, and there may be a combination between a resilient scrape blade and brush bristles.

The present disclosure is not limited to the examples above, but may vary freely within the scope of the appended claims. For example, the cleaner holder 151, 251 and the debris removal protrusion 152, 252 are formed in the same piece of material. This enables an unexpensive manufacturing process and provides a durable part.

## Claims

1. A wheel cleaning device (150, 150A; 250) adapted to be attached to a swivelable wheel (130; 130A, 130B) of a robotic lawn mower (100), the swivelable wheel (130; 130A, 130B) comprising a rotatable wheel part (132), a wheel shield (133) at a center of the wheel part (132), and a holding arm (134) that is adapted to connect the wheel part (132) to the robotic lawn mower (100) in a swivelable manner, extending into the wheel part (132) via the wheel shield (133) that is fixed relative the holding arm (134), the wheel cleaning device (150, 250) comprising a cleaner holder (151, 251) that is adapted to be attached to a side of the wheel part (132), radially displaced from the wheel shield (133), and a debris removal protrusion (152, 252) that has a longitudinal extension (E) and is adapted to extend from the cleaner holder (151, 251) towards the wheel shield (133) along its longitudinal extension (E) when mounted.

2. The wheel cleaning device (150, 150A) according to claim 1, wherein the debris removal protrusion (152) comprises a resilient scrape blade (152) that extends along the longitudinal extension (E).

3. The wheel cleaning device (250) according to claim 1, wherein the debris removal protrusion (252) comprises brush bristles (253) that extend along the longitudinal extension (E).

4. The wheel cleaning device (250) according to any one of the previous claims, wherein the cleaner holder (151, 251) and the debris removal protrusion (152, 252) are formed in the same piece of material.

5. A swivelable wheel arrangement (155, 255) adapted to be attached to a robotic lawn mower (100), the swivelable wheel arrangement (155, 255) comprising a swivelable wheel (130) that in turn comprises a rotatable wheel part (132), a wheel shield (133) at a center of the wheel part (132), and a holding arm (134) that is adapted to connect the wheel part (132) to the robotic lawn mower (100) in a swivelable manner, extending into the wheel part (132) via the wheel shield (133) that is fixed relative the holding arm (134), wherein the swivelable wheel arrangement (155) comprises the wheel cleaning device (150, 150A; 250) according to any one of the previous claims, being attached to a side of the wheel part (132), radially displaced from the wheel shield (133).

6. The swivelable wheel arrangement (155, 255) according to claim 5, wherein the wheel cleaning device is attached to the rotatable wheel part by means of at least one screw (157A, 157B).

7. The swivelable wheel arrangement (255') according to any one of the claims 5 or 6, wherein the debris removal protrusion (252) comprises brush bristles (253) that extend along the longitudinal extension (E), and where the wheel shield (133') comprises a protruding tab (259), where the debris removal protrusion (252) is adapted to contact the tab (259) each revolution of the swivelable wheel (130') such that grass residue is removed from the debris removal protrusion (252).

8. A robotic lawn mower (100) comprising a body (140), at least one pair of drive wheels (131A, 131B), at least one rotatable grass cutting disc (160), having a disc rotation axle (165), wherein the robotic lawn mower (100) further comprises at least one swivelable wheel (130A, 130B; 130) according to any one of the claims 5-7.
